(19) **Europäisches Patentamt / European Patent Office / Office européen des brevets**

(11) **EP 4 714 560 A1**

(12) **EUROPEAN PATENT APPLICATION**
published in accordance with Art. 153(4) EPC

(43) Date of publication:
**25.03.2026 Bulletin 2026/13**

(21) Application number: **23943274.3**

(22) Date of filing: **31.10.2023**

(51) International Patent Classification (IPC):
**B05C 5/02** (2006.01)    **B05C 11/10** (2006.01)
**H01M 4/139** (2010.01)    **H01M 4/08** (2006.01)

(52) Cooperative Patent Classification (CPC):
**H01M 4/0411; H01M 4/0404;** Y02E 60/10

(86) International application number:
**PCT/CN2023/128540**

(87) International publication number:
**WO 2025/000795 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.06.2023 CN 202321618854 U**

(71) Applicant: **Contemporary Amperex Technology Co., Limited**
**Ningde, Fujian 352100 (CN)**

(72) Inventors:
• **ZHAN, Bingyang**
  **Ningde, Fujian 352100 (CN)**

• **ZHANG, Jingdong**
  **Ningde, Fujian 352100 (CN)**
• **ZHANG, Lai**
  **Ningde, Fujian 352100 (CN)**
• **ZHEN, Zhihui**
  **Ningde, Fujian 352100 (CN)**
• **WANG, Qiangjun**
  **Ningde, Fujian 352100 (CN)**
• **CHEN, Weigang**
  **Ningde, Fujian 352100 (CN)**

(74) Representative: **Gong, Jinping**
**CocreateIP**
**Neumarkter Straße 21**
**81673 München (DE)**

(54) **COATING DIE HEAD, AND COATING APPARATUS FOR ELECTRODE SHEETS**

(57)    Provided are a coating die head and a coating apparatus for an electrode sheet. The coating die head is provided with a feed inlet (111), a first flow equalizing cavity (11210), flow channels (11220), and a plurality of coating ports (1410); the first flow equalizing cavity (11210) extends in a first direction and is communicated with the feed inlet (111); the plurality of coating ports (1410) are arranged at intervals in the first direction; and the flow channels (11220) are configured to communicate the first flow equalizing cavity (11210) with the plurality of coating ports (1410). In the direction of the coating ports (1410) moving away from the feed inlet (111), the minimum lengths of the flow channels (11220) between the coating ports (1410) among the plurality of coating ports (1410) and the first flow equalizing cavity (11210) show a decreasing trend.

FIG. 4

**Description**

CROSS-REFERENCE TO RELATED APPLICATIONS

The present application claims priority to Chinese Patent Application No. 202321618854.7, filed on June 25, 2023 and entitled "Coating Die Head and Coating Apparatus for Electrode Sheet", which is incorporated herein by reference in its entirety.

TECHNICAL FIELD

The present application relates to the technical field of battery production, in particular to a coating die head and a coating apparatus for an electrode sheet.

BACKGROUND

Batteries with high specific energy, high power density and other advantages are widely used in electronic devices, such as mobile phones, notebook computers, electric bicycles, electric vehicles, electric airplanes, electric ships, electric toy cars, electric toy ships, electric toy airplanes, electric tools, etc.

As an important process in the production of batteries, the coating process greatly affects the quality of batteries. Improving the uniformity of slurry coating in the coating process has always been an important research direction for those skilled in the art.

SUMMARY

In view of the above problems, provided in the present application are a coating die head and a coating apparatus for an electrode sheet. The coating die head can improve the uniformity of slurry coating in the coating process.

In a first aspect, provided in the present application is a coating die head, including a die head body provided with a feed inlet, a first flow equalizing cavity, flow channels, and a plurality of coating ports, where the first flow equalizing cavity extends in a first direction and is communicated with the feed inlet, the plurality of coating ports are arranged at intervals in the first direction, and the flow channels are configured to communicate the first flow equalizing cavity with the plurality of coating ports; and in the direction of the coating ports moving away from the feed inlet, the minimum lengths of the flow channels between the coating ports among the plurality of coating ports and the first flow equalizing cavity show a decreasing trend.

In the above structure, the pressure lost by the slurry flowing to the coating ports moving away from the feed inlet during the flow process is lower than the pressure lost by the slurry flowing to the coating ports close to the feed inlet during the flow process, thereby increasing the pressure of the slurry at the coating ports moving away from the feed inlet, balancing the pressure of the slurry at the plurality of coating ports, facilitating the improvement of the discharge consistency of the plurality of coating ports, and improving the uniformity of slurry coating in the coating process.

According to the coating die head provided in some embodiments of the present application, the die head body includes a first die head, a second die head, and a bead, where the first die head includes a first cavity and the feed inlet communicated with the first cavity; the second die head is connected to the bead and covers the first cavity; the bead is spaced apart from at least part of an inner wall of the first cavity; and a gap between the bead and the inner wall of the first cavity forms the flow channels and the first flow equalizing cavity.

According to the coating die head provided in some embodiments of the present application, the bead includes first side faces, a second side face, and a third side face, where the second side face is oppositely spaced apart from the third side face in a second direction; the first side faces are connected between the second side face and the third side face; the third side face is attached to an inner wall face of the first cavity; the flow channels are formed between the first side faces and the inner wall face of the first cavity; the first flow equalizing cavity is formed between the second side face and the inner wall face of the first cavity; and the second direction is perpendicular to the first direction. The flow channels are formed between the first side faces and the inner wall face of the first cavity, and the first flow equalizing cavity is formed between the second side face and the inner wall face of the first cavity, so that the flow channels are smoothly communicated with the first flow equalizing cavity.

According to the coating die head provided in some embodiments of the present application, the die head body further includes a gasket, where the gasket is provided with a plurality of notches at intervals in the first direction, and the gasket is sandwiched between the first die head and the second die head; and the plurality of notches are all communicated with the flow channels to form the coating ports, so that the coating ports are communicated with the first flow equalizing cavity through the flow channels.

According to the coating die head provided in some embodiments of the present application, the first die head is provided with a second cavity; the second die head covers the second cavity to form a second flow equalizing cavity; and the second flow equalizing cavity is communicated with the plurality of coating ports. The second cavity can temporarily store the slurry flowing to the coating ports, which is beneficial to making the output of the slurry more uniform and stable.

According to the coating die head provided in some embodiments of the present application, the coating die head further includes first adjusting rods and second adjusting rods, where the first adjusting rods are connected to the first die head; the second adjusting rods are connected to the second die head; and the first adjusting rods and the second adjusting rods are configured to adjust the sizes of the openings of the coating ports, so that the coating die head can adjust the coating weight of the slurry.

According to the coating die head provided in some embodiments of the present application, the first cavity and the bead both extend in the first direction, and the spacing between the second side face and the third side face continuously decreases in the direction of the coating ports moving away from the feed inlet in the first direction, so that the shortest parts of the flow channels for communicating the coating ports with the first flow equalizing cavity are continuously shortened in the direction of the coating ports moving away from the feed inlet in the first direction, thereby ensuring that the minimum lengths of the flow channels between the coating ports close to the feed inlet and the first flow equalizing cavity are greater than the minimum lengths of the flow channels between the coating ports moving away from the feed inlet and the first flow equalizing cavity.

According to the coating die head provided in some embodiments of the present application, the first side face is configured as an arc surface, so that the slurry flows smoothly in the flow channels, which is beneficial to reducing the resistance of the slurry when flowing.

According to the coating die head provided in some embodiments of the present application, the die head body further includes a connecting member; the gasket is provided with a through hole; and the connecting member passes through the bead and the through hole to be connected to the second die head, so as to fix the bead to the second die head, so that the bead is detachably connected to the second die head.

According to the coating die head provided in some embodiments of the present application, there are a plurality of first adjusting rods arranged at intervals in the first direction, and there are a plurality of second adjusting rods arranged at intervals in the first direction, so that an operator can individually adjust the opening degrees of the plurality of coating ports arranged at intervals in the first direction through the plurality of first adjusting rods or the plurality of second adjusting rods, and the weight of the coating slurry at the coating ports can be flexibly adjusted.

In a second aspect, further provided in some embodiments of the present application is a coating apparatus for an electrode sheet, including the coating die head provided in any one of the above technical solutions, where the coating die head is configured to coat a surface of the electrode sheet with a slurry.

The technical solutions provided in the embodiments of the present disclosure have at least the following beneficial effects:

Provided in the present application is a coating die head provided with a feed inlet, a first flow equalizing cavity, flow channels, and a plurality of coating ports, where the first flow equalizing cavity extends in a first direction and is communicated with the feed inlet, the plurality of coating ports are arranged at intervals in the first direction, and the flow channels are configured to communicate the first flow equalizing cavity with the plurality of coating ports. Since the minimum lengths of the flow channels between the coating ports among the plurality of coating ports and the first flow equalizing cavity show a decreasing trend in the direction of the coating ports moving away from the feed inlet, the pressure lost by the slurry flowing to the coating ports moving away from the feed inlet during the flow process is lower than the pressure lost by the slurry flowing to the coating ports close to the feed inlet during the flow process, thereby increasing the pressure of the slurry at the coating ports moving away from the feed inlet, balancing the pressure of the slurry at the plurality of coating ports, facilitating the improvement of the discharge consistency of the plurality of coating ports, and improving the uniformity of slurry coating in the coating process.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

DESCRIPTION OF DRAWINGS

Various other advantages and benefits will become clear to a person of ordinary skill in the art upon reading the detailed description of the preferred embodiments below. The accompanying drawings are used only for the purpose of illustrating the preferred embodiments and are not to be construed as limitations on the present application. Moreover, throughout the drawings, identical reference numerals are used to designate identical components. In the accompanying drawings:

FIG. 1 is a perspective view of a coating die head according to some embodiments of the present application;

FIG. 2 is a schematic structural diagram showing a coating die head according to some embodiments of the present application from one perspective;

FIG. 3 is a schematic structural diagram showing a coating die head according to some embodiments of the present application from another perspective; and

FIG. 4 is a cross-sectional view at A in FIG. 1;

FIG. 5 is a cross-sectional view at B in FIG. 1;

FIG. 6 is a cross-sectional view of a first die head and a bead according to some embodiments of the present application;

FIG. 7 is a schematic structural diagram showing a first die head and a bead according to some embodiments of the present application;

FIG. 8 is a schematic structural diagram showing a first die head according to some embodiments of the present application;

FIG. 9 is a schematic structural diagram showing a portion of a die head body according to some embodiments of the present application; and

FIG. 10 is an enlarged view at C in FIG. 3.

Reference numerals in specific embodiments are as follows:
1. die head body; 11. first die head; 111. feed inlet; 112. first cavity; 1121. inner wall face; 11210. first flow equalizing cavity; 11220. flow channel; 113. second cavity; 11310. second flow equalizing cavity; 12. second die head; 13. bead; 131. first side face; 132. second side face; 133. third side face; 14. gasket; 141. notch; 142. through hole; 1410. coating port; 15. connecting member; 2. first adjusting rod; 3. second adjusting rod; X. first direction; Y. second direction; and Z. third direction.

DESCRIPTION OF EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

It should be noted that, unless otherwise specified, the technical terms or scientific terms used in the embodiments of the present application shall have the ordinary meanings as understood by a person of ordinary skill in the art to which the embodiments of the present application pertain.

In the description of the embodiments of the present application, orientations or positional relationships indicated by the technical terms such as "center", "longitudinal", "transverse", "length", "width", "thickness", "upper", "lower", "front", "rear", "left", "right", "vertical", "horizontal", "top", "bottom", "inner", "outer", "clockwise", "counter-clockwise", "axial", "radial", "circumferential", and the like are based on orientations or positional relationships shown in the drawings, and are merely for convenience of description of the embodiments of the present application and simplified description, and do not indicate or imply that an indicated apparatus or element must have a specific orientation or be configured and operated in a specific orientation, and thus should not be construed as limitations on the embodiments of the present application.

In addition, the technical terms "first", "second" and the like are only used for descriptive purposes, and should not be construed as indicating or implying relative importance or implicitly indicating the number of technical features indicated. In the description of the embodiments of the present application, "a plurality of" means two or more unless specifically defined otherwise.

In the description of the embodiments of the present application, unless explicitly specified and defined otherwise, the terms "mount", "couple", "connect", and "fasten" should be broadly understood, for example, they may be a fixed connection, a detachable connection, or an integral connection; or may be a mechanical connection, or an electrical connection; or may be a direct connection, or an indirect connection via an intermediate medium, or an internal communication between two elements or interaction between two elements. A person of ordinary skill in the art may understand the specific meanings of the above terms in the embodiments of the present application according to specific situations.

In the description of the embodiments of the present application, unless otherwise specified and limited, a first feature being "above" or "below" a second feature may be that the first feature is in direct contact with the second feature, or the first feature is in indirect contact with the second feature through an intermediate medium. Moreover, the first feature being "over", "above", or "on" the second feature may be that the first feature is directly above or diagonally above the second feature, or merely indicate that the first feature is horizontally higher than the second feature. The first feature being "below", "under", or "beneath" the second feature may be that the first feature is directly below or diagonally below the second feature, or merely indicate that the first feature is horizontally lower than the second feature.

At present, in view of the development of the market, the use of batteries is becoming increasingly more widespread. Batteries are used not only in energy storage power systems such as hydropower, thermal power, wind power, and solar power plants, but also in electric tools such as electric bicycles, electric motorcycles, and electric vehicles, as well as military equipment, aerospace, and many other fields.

Coating is an indispensable process in the production process of batteries, and the coating process has a very important influence on the quality of batteries, and directly affects various performance indicators such as safety, capacity and life of the batteries. Coating is a key process of battery production. Coating is a method for producing composite materials (films) by applying paste-like polymers, molten polymers, or polymer solutions onto paper, cloth, or plastic films. In the coating process of an electrode sheet, a coating die head applies slurry onto the surface of the electrode sheet to impart excellent electrical properties to the electrode sheet.

At present, when coating the electrode sheets using a coating die head, to improve coating efficiency, the coating die head is typically provided with a plurality of coating ports to enable simultaneous coating at a plurality of locations on the electrode sheets. However, since the plurality of coating ports on the coating die head are positioned at different distances from the feed inlet for the slurry, the flow rate of the slurry at the coating ports close to the feed inlet is greater than that at the coating ports moving away from the feed inlet, due to the inertial effects of slurry flow from the feed inlet and pressure losses in the slurry at positions away from the feed inlet. As a result, the coating weight varies across different areas of the electrode sheet surface, reducing the consistency of the electrode sheets and adversely affecting their quality.

In order to improve the uniformity of slurry coating in the coating process, provided in the embodiments of the present application is a coating die head provided with a feed inlet, a first flow equalizing cavity, flow channels, and a plurality of coating ports, where the first flow equalizing cavity extends in a first direction and is communicated with the feed inlet, the plurality of coating ports are arranged at intervals in the first direction, and the flow channels are configured to communicate the first flow equalizing cavity with the plurality of coating ports. The minimum lengths of the flow channels between the coating ports close to the feed inlet and the first flow equalizing cavity are configured to be greater than the minimum lengths of the flow channels between the coating ports moving away from the feed inlet and the first flow equalizing cavity, so that the pressure lost by the slurry flowing to the coating ports moving away from the feed inlet during the flow process is lower than the pressure lost by the slurry flowing to the coating ports close to the feed inlet during the flow process, thereby increasing the pressure of the slurry at the coating ports moving away from the feed inlet, balancing the pressure of the slurry at the plurality of coating ports, facilitating the improvement of the discharge consistency of the plurality of coating ports, and improving the uniformity of slurry coating in the coating process.

The coating die head disclosed in the embodiments of the present application can be used for, but not limited to, coating electrode sheets, and can also be used for coating other films such as paper, cloth, or plastic films to obtain a composite material (film), thereby obtaining a composite material (film) having certain characteristics.

The technical solutions of the coating die head and the coating apparatus for the electrode sheet provided in the specific embodiments of the present application are further described below.

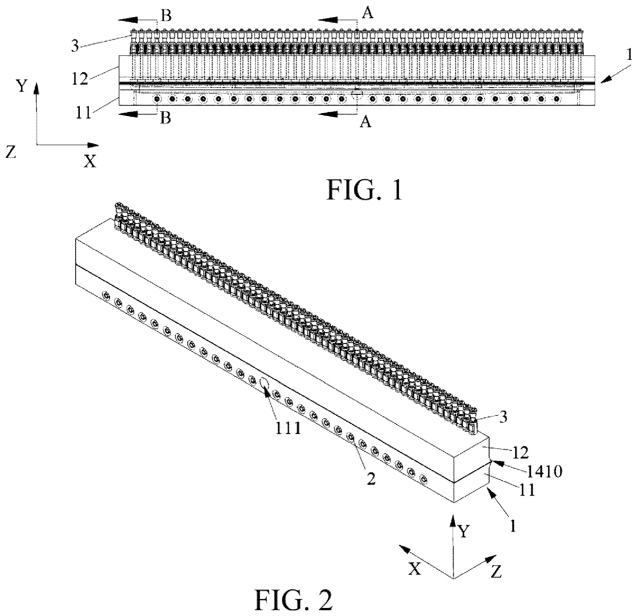

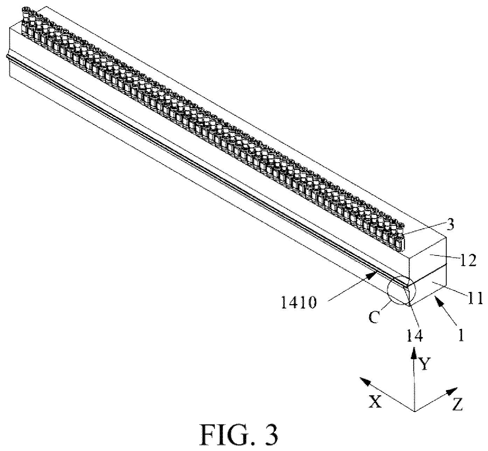

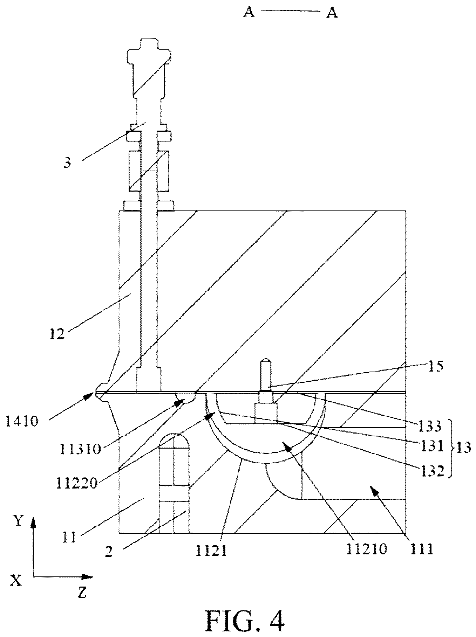

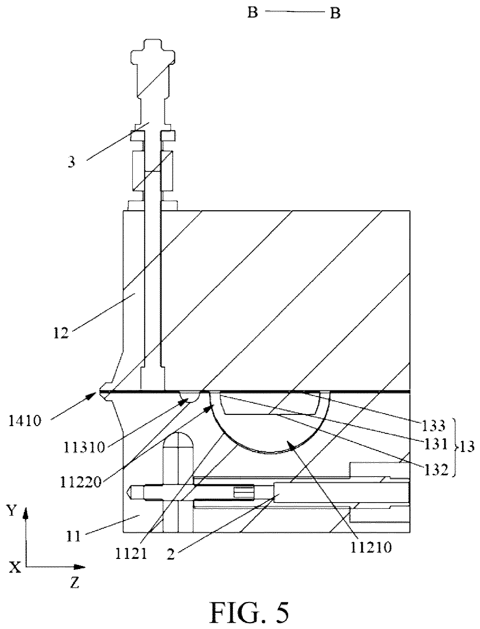

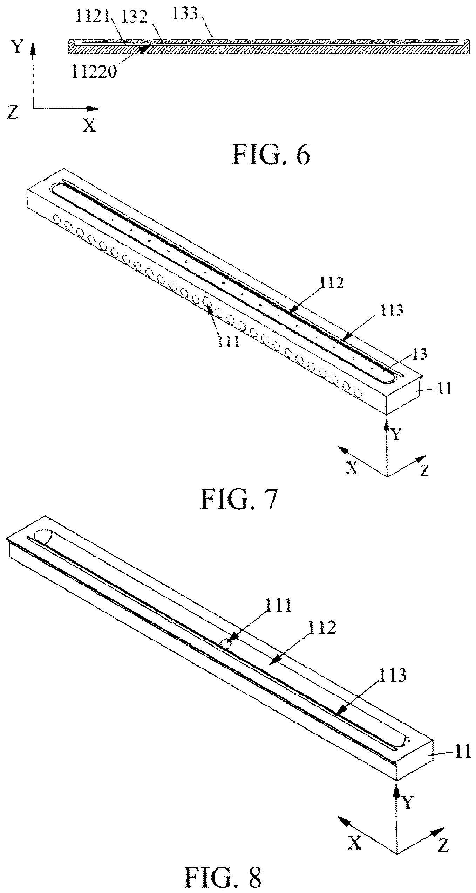

Provided in some embodiments of the present application is a coating die head. As shown in FIG. 1 to FIG. 3, the coating die head includes a die head body 1. As shown in FIG. 4 and FIG. 5, the coating die head is provided with a feed inlet 111, a first flow equalizing cavity 11210, flow channels 11220, and a plurality of coating ports 1410, where the first flow equalizing cavity 11210 extends in a first direction X and is communicated with the feed inlet 111, the plurality of coating ports 1410 are arranged at intervals in the first direction X, and the flow channels 11220 are configured to communicate the first flow equalizing cavity 11210 with the plurality of coating ports 1410. As shown in FIG. 6, in the direction of the coating ports 1410 moving away from the feed inlet 111, the minimum lengths of the flow channels 11220 between the coating ports 1410 among the plurality of coating ports 1410 and the first flow equalizing cavity 11210 show a decreasing trend.

Exemplarily, the coating die head may be a component of a coating apparatus in the coating process, which is configured to coat a surface of the electrode sheet with a slurry; and after the slurry is passed into the coating die head, the slurry is synchronously coated on a plurality of portions of the electrode sheet under the action of the coating die head, so as to realize efficient coating on the electrode sheet.

The die head body 1 may be a main body structure in the coating die head, which is configured to bear and arrange the structures or members in the coating die head. The feed inlet 111, the first flow equalizing cavity 11210, the flow channels 11220, and the plurality of coating ports 1410 are all disposed on the die head body 1.

The feed inlet 111 may be an opening structure provided on the die head body 1, which is configured to allow the slurry to pass into the die head body 1. The first flow equalizing cavity 11210 may be a cavity structure provided in the die head body 1. The first flow equalizing cavity extends in the first direction X in the die head body 1 and is communicated with the feed inlet 111, so that the slurry flowing in from the feed inlet 111 can be distributed and temporarily stored in the die head body 1 in the first direction X, which facilitates subsequent flow to the plurality of coating ports 1410. The coating port 1410 may be an opening structure provided on the die head body 1, which is configured to allow the outflow of the slurry, so that the slurry can be coated on the surface of the electrode sheet.

Exemplarily, there are a plurality of coating ports 1410 arranged at intervals in the first direction X, so that the die head body 1 can simultaneously coat a plurality of portions of the electrode sheet in the first direction X, which is beneficial to improving the coating efficiency of the coating die head.

The flow channel 11220 may be a structure provided in the die head body 1 for communicating the first flow equalizing cavity 11210 with the plurality of coating ports 1410, so that the slurry in the first flow equalizing cavity 11210 can smoothly flow into the plurality of coating ports 1410. In the direction of the coating ports 1410 moving away from the feed inlet 111, the minimum lengths of the flow channels 11220 between the coating ports 1410 among the plurality of coating ports 1410 and the first flow equalizing cavity 11210 show a decreasing trend. This may be the case where the minimum lengths of some of the flow channels 11220 for communicating the coating ports 1410 close to the feed inlet 111 among the plurality of coating ports 1410 with the first flow equalizing cavity 11210 are greater than the minimum lengths of some of the flow channels 11220 for communicating the coating ports 1410 moving away from the feed inlet 111 among the plurality of coating ports 1410 with the first flow equalizing cavity 11210, so that the pressure lost by the slurry flowing to the coating ports 1410 moving away from the feed inlet 111 during the flow process is lower than the pressure lost by the slurry flowing to the coating ports 1410 close to the feed inlet 111 during the flow process, thereby increasing the pressure of the slurry at the coating port 1410 moving away from the feed inlet 111, balancing the pressure of the slurry at the plurality of coating ports 1410, facilitating the improvement of the discharge consistency of the plurality of coating ports 1410, and improving the uniformity of slurry coating in the coating process.

Exemplarily, the plurality of coating ports 1410 are distributed at intervals in the first direction X of the die head body 1, the feed inlet 111 is communicated with the middle of the first flow equalizing cavity 11210 extending in the first direction X in the die head body 1, and the flow channels 11220 communicate the first flow equalizing cavity 11210 with the plurality of coating ports 1410. In the direction moving away from the feed inlet 111, the minimum lengths of the flow channels 11220 between the plurality of coating ports 1410 located on two sides of the feed inlet 111 and the first flow equalizing cavity 11210 continuously decrease, so that the pressure lost by the slurry flowing through the flow channels 11220 can be continuously reduced.

In some embodiments, the die head body 1 includes a first die head 11, a second die head 12, and a bead 13, where the first die head 11 includes a first cavity 112 and the feed inlet 111 communicated with the first cavity 112; the second die head 12 is connected to the bead 13 and covers the first cavity 112; the bead 13 is spaced apart from at least part of an inner wall of the first cavity 112; and a gap between the bead 13 and the inner wall of the first cavity 112 forms the flow channels 11220 and the first flow equalizing cavity 11210.

The first die head 11, the second die head 12, and the bead 13 may all be components in the die head body 1, and they are connected to form the die head body 1 and can also form structures such as the first flow equalizing cavity 11210 and the flow channels 11220 in the die head body 1. The first cavity 112 may be a groove-shaped structure provided on the first die head 11 and extending in the first direction X to form the first flow equalizing cavity 11210; the bead 13 may be a strip-shaped member extending in the first direction X and connected to the first die head 11; and the second die head 12 covers the first cavity 112 and allows the bead 13 to extend into the first cavity 112. As shown in FIG. 7, the bead 13 is spaced apart from at least part of the inner wall of the first cavity 112, so that the first flow equalizing cavity 11210 extending in the first direction X and the flow channels 11220 are formed between the bead 13 and the inner wall of the first cavity 112, where the first flow equalizing cavity 11210 and the flow channels 11220 are communicated with each other.

Exemplarily, the shape of the cross section of the first cavity 112 perpendicular to the first direction X may be set to be semicircular, so that the resistance to the slurry flowing in the first cavity 112 is small, and the pressure lost by the slurry when flowing is reduced. As shown in FIG. 8, the first cavity 112 is provided on a side face of the first die head 11 facing the second die head 12, the feed inlet 111 is also provided on the first die head 11 and is communicated with the first cavity 112, the bead 13 is connected to a side face of the second die head 12 facing the first die head 11, the first die head 11 and the second die head 12 are buckled, the bead 13 connected to the second die head 12 is placed in the first cavity 112, and the flow channels 11220 and the first flow equalizing cavity 11210 are formed between the bead 13 and an inner wall face 1121 of the first cavity 112 on the first die head 11.

In some embodiments, the bead 13 includes first side faces 131, a second side face 132, and a third side face 133, where the second side face 132 is oppositely spaced apart from the third side face 133 in a second direction Y; the first side face 131 is connected between the second side face 132 and the third side face 133; the third side face 133 is attached to the inner wall face 1121 of the first cavity 112; the flow channels 11220 are formed between the first side faces 131 and the inner wall face 1121 of the first cavity 112; the first flow equalizing cavity 11210 is formed between the second side face 132 and the inner wall face 1121 of the first cavity 112; and the second direction Y is perpendicular to the first direction X.

The first side face 131, the second side face 132, and the third side face 133 may be different surfaces on the outer side of the bead 13, and the first side face 131, the second side face 132, and the third side face 133 are each spaced apart from the inner wall of the first cavity 112. The second side face 132 and the third side face 133 may be two side faces oppositely spaced apart from each other in the second direction Y perpendicular to the first direction X, and the third side face 133 being attached to the inner wall face 1121 of the first cavity 112 may mean that the third side face 133 is attached to the side face of the second die head 12, so that the bead 13 can be more stable when connected to the second die head 12, and a gap between the second side face 132 and the inner wall face 1121 of the first cavity 112 forms the first flow equalizing cavity 11210. The first side faces 131 may be side faces of the bead 13 connected between the second side face 132 and the third side face 133, and gaps between the first side faces 131 and the inner wall face 1121 of the first cavity 112 form the flow channels 11220 communicating the coating ports 1410 with the first flow equalizing cavity 11210.

In some embodiments, the cross-sectional area of the first flow equalizing cavity 11210 perpendicular to the first direction X is configured to be greater than the cross-sectional area of the flow channels 11220 perpendicular to the first direction X, so that the first flow equalizing cavity 11210 has a large volume and can temporarily store the slurry, thereby achieving a function of stabilizing the pressure, and making the output of the slurry more uniform and stable. Exemplarily, the second side face 132 of the bead 13 is spaced apart from the third side face 133, so that the gap between the second side face 132 and the inner wall face 1121 of the first cavity 112 in a semicircular shape is large, so as to store the slurry.

In some embodiments, the first cavity 112 and the bead 13 both extend in the first direction X, and the spacing between the second side face 132 and the third side face 133 continuously decreases in the direction of the coating ports 1410 moving away from the feed inlet 111 in the first direction X.

Both the first cavity 112 and the bead 13 extend in the first direction X, so that both the first flow equalizing cavity 11210 and the flow channels 11220 are continuously arranged in the first direction X. The spacing between the second side face 132 and the third side face 133 continuously decreasing in the direction of the coating ports 1410 moving away from the feed inlet 111 in the first direction X may mean that the spacing between the second side face 132 and the third side face 133 in the second direction Y continuously decreases in the direction of the coating ports 1410 moving away from the feed inlet 111 in the first direction X, so that the shortest parts of the flow channels 11220 for communicating the coating ports 1410 with the first flow equalizing cavity 11210 are continuously shortened in the direction of the coating ports 1410 moving away from the feed inlet 111 in the first direction X, and the minimum lengths of the flow channels 11220 between the coating ports 1410 close to the feed inlet 111 and the first flow equalizing cavity 11210 are greater than the minimum lengths of the flow channels 11220 between the coating ports 1410 moving away from the feed inlet 111 and the first flow equalizing cavity 11210.

Exemplarily, the bead 13 extending in the first direction X may be formed by splicing a plurality of sections, which can reduce the manufacturing cost and difficulty of the bead 13; and the bead 13 may also be an integrally formed structure, so that the bead 13 has good overall strength. Those skilled in the art can select the composition form of the bead 13 according to actual situations.

In some embodiments, the spacing between the second side face 132 and the third side face 133 in the second direction Y is set as follows:

$$y = ax^2 + bx + c \qquad (1)$$

where y is the spacing between the second side face 132 and the third side face 133 in the second direction Y, x is the distance between the coating ports 1410 and the feed inlet 111 in the first direction X, and a, b, and c are all constants obtained based on simulation and field verification. Exemplarily, a may range from -0.00003 to -0.00005, b may range from 0.0001 to 0.0003, and c may range from 5 to 30. In some embodiments, a may range from -0.00001 to -0.00003, b may range from 0.00005 to 0.0002, and c may range from 10 to 25, for example, a may be -0.00002, b may be 0.0001, and c may be 18.

In some embodiments, the spacing between the second side face 132 and the third side face 133 in the second direction Y may also be set in a linear, exponential, logarithmic or power-function manner. Those skilled in the art can set the spacing between the second side face 132 and the third side face 133 in the second direction Y according to actual situations.

Exemplarily, the coating die head provided in the present application may be applicable to an electrode sheet having a width ranging from 800 mm to 2,000 mm; the lengths of the first die head 11 and the second die head 12 in the first direction X are equal and the sizes thereof exceeding the electrode sheet range from 100 mm to 350 mm; the size of the first die head 11 exceeding the first flow equalizing cavity 11210 in the first direction X ranges from 65 mm to 210 mm; and the size of the first flow equalizing cavity 11210 exceeding the bead 13 in the first direction X ranges from 3 mm to 25 mm.

Exemplarily, when the slurry formula is changed, the coating die head can improve the uniformity of slurry coating by changing beads 13 with different spacings between the second side face 132 and the third side face 133 in the second direction Y.

In some embodiments, the first side face 131 is configured as an arc surface.

The first side face 131 being configured as an arc surface may mean that the shape of the cross section of the first side face 131 perpendicular to the first direction X is an arc, so that the first side face 131 matches the inner wall face 1121 of the first cavity 112 in a semicircular shape, and the slurry flows smoothly in the flow channels 11220, which is beneficial to reducing the resistance of the slurry when flowing.

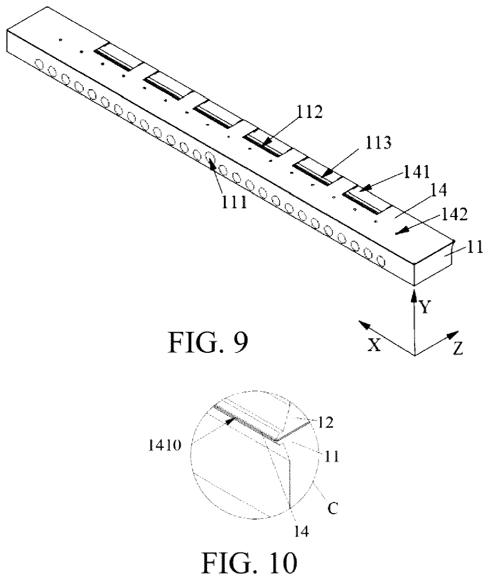

In some embodiments, as shown in FIG. 9, the die head body 1 further includes a gasket 14, where the gasket 14 is provided with a plurality of notches 141 at intervals in the first direction X, and the gasket 14 is sandwiched between the first die head 11 and the second die head 12; and the plurality of notches 141 are all communicated with the flow channels 11220 to form the coating ports 1410.

The gasket 14 may be a member for forming the plurality of coating ports 1410. The plurality of notches 141 are arranged at intervals on the gasket 14 in the first direction X, and the notches 141 are provided through the gasket 14 in the thickness direction of the gasket 14 and are communicated with the edge of the gasket 14. As shown in FIG. 10, the gasket 14 is sandwiched between the first die head 11 and the second die head 12, and the notches 141 on the gasket 14 are communicated with the flow channels 11220, so that the gasket 14, the first die head 11, and the second die head 12 can form a plurality of coating ports 1410 communicated with the flow channels 11220 and the outside, and the slurry in the first flow equalizing cavity 11210 can flow into the notches 141 to flow out to the outside for coating.

In some embodiments, the notches 141 on the gasket 14 may be manufactured synchronously with the gasket 14 by an integrated processing method such as casting, so that the gasket 14 with the notches 141 can be manufactured integrally and synchronously, which not only facilitates the processing and manufacturing of the gasket 14, but also makes the overall structure of the gasket 14 have good strength; and the notches 141 may also be manufactured by processing a whole blank of the gasket 14 by a machining method such as milling, so that the gasket 14 has low processing difficulty and processing cost.

In some embodiments, the die head body 1 further includes a connecting member 15; the gasket 14 is provided with a through hole 142; and the connecting member 15 passes through the bead 13 and the through hole 142 to be connected to the second die head 12, so as to fix the bead 13 to the second die head 12.

The connecting member 15 may be a connecting member for connecting the bead 13 to the second die head 12. The through hole 142 provided on the gasket 14 may be a hole-like structure penetrating the gasket 14 in the thickness direction of the gasket 14, and the bead 13 connected to the connecting member 15 passes through the through hole 142 and is connected to the second die head 12, so as to connect the connecting member 15 to the second die head 12.

Exemplarily, the connecting member 15 may be a connecting bolt, the bead 13 is provided with a countersunk hole, the side face of the second die head 12 facing the first die head 11 is provided with a threaded hole, the connecting bolt sequentially extends through the countersunk hole and the through hole 142 and is screwed into the threaded hole, the bead 13 is connected to the second die head 12, and a part of the gasket 14 is sandwiched between the bead 13 and the second die head 12.

In some embodiments, the first die head 11 is provided with a second cavity 113; the second die head 12 covers the second cavity 113 to form a second flow equalizing cavity 11310; and the second flow equalizing cavity 11310 is communicated with the plurality of coating ports 1410.

The second cavity 113 may be a groove-shaped structure provided by the first die head 11, and the second die head 12 covers the second cavity 113, so that the second cavity 113 forms a second flow equalizing cavity 11310 communicated with the plurality of coating ports 1410.

Exemplarily, the second cavity 113 extends in the first direction X, so that the second flow equalizing cavity 11310 formed by the second cavity 113 can communicate the plurality of coating ports 1410 arranged at intervals in the first direction X, and the second cavity 113 can temporarily store the slurry flowing to the coating ports 1410, which is beneficial to make the output of the slurry more uniform and stable.

Exemplarily, the second cavity 113 is provided on a side face of the first die head 11 facing the second die head 12; in a third direction Z perpendicular to the first direction X, the second cavity 113 is provided in parallel with and spaced apart from the first cavity 112; and when the slurry flows into the coating ports 1410 through the flow channels 11220, the slurry can flow into the second flow equalizing cavity 11310 formed by the second cavity 113.

In some embodiments, the coating die head further includes first adjusting rods 2 and second adjusting rods 3, where the first adjusting rods 2 are connected to the first die head 11; the second adjusting rods 3 are connected to the second die head 12; and the first adjusting rods 2 and the second adjusting rods 3 are configured to adjust the sizes of the openings of the coating ports 1410.

The first adjusting rods 2 and the second adjusting rods 3 each refer to a rod-shaped member for adjusting the size of the opening of the coating port 1410 of the coating die head. The first adjusting rods 2 are connected to the first die head 11, and the second adjusting rods 3 are connected to the second die head 12, so that the operator can drive the first die head 11 to move through the first adjusting rods 2 to adjust the sizes of the openings of the coating ports 1410, and can also drive the second die head 12 to move through the second adjusting rods 3 to adjust the sizes of the openings of the coating ports 1410, so as to adjust the coating weight of the slurry by the coating die head.

In some embodiments, there are a plurality of first adjusting rods 2 arranged at intervals in the first direction X, and there are a plurality of second adjusting rods 3 arranged at intervals in the first direction X.

By providing the plurality of first adjusting rods 2 arranged at equal intervals in the first direction X on the first die head 11, the operator can individually adjust the opening degrees of the plurality of coating ports 1410 arranged at intervals in the first direction X through the plurality of first adjusting rods 2, so that the weight of the coating slurry at the coating ports 1410 can be flexibly adjusted. By providing the plurality of second adjusting rods 3 arranged at equal intervals in the first direction X on the second die head 12, the operator can individually adjust the opening degrees of the plurality of coating ports 1410 arranged at intervals in the first direction X through the plurality of second adjusting rods 3, so that the weight of the coating slurry at the coating ports 1410 can be flexibly adjusted.

According to some embodiments of the present application, provided in the present application is a coating die head, including a die head body 1, first adjusting rods 2, and second adjusting rods 3, where the die head body 1 includes a first die head 11, a second die head 12, a bead 13, and a gasket 14; the first die head 11 is provided with a feed inlet 111 and a first cavity 112 and a second cavity 113 extending in a first direction X; the feed inlet 111 is communicated with the first cavity 112; the first cavity 112 is spaced apart from the second cavity 113; the gasket 14 is provided with a plurality of notches 141 arranged at intervals in the first direction X, and the gasket 14 is sandwiched between the first die head 11 and the second die head 12; the notches 141 of the gasket 14 form coating ports 1410 together with the first die head 11 and the second die head 12; the bead 13 is connected to the second die head 12 and placed in the first cavity 112; flow channels 11220 are formed between first side faces 131 of the bead 13 and an inner wall face 1121 of the first cavity 112; a first flow equalizing cavity 11210 is formed between a second side face 132 and the inner wall face 1121 of the first cavity 112; and the flow channels 11220 communicate the first flow equalizing cavity 11210 with the plurality of coating ports 1410.

The second side face 132 in the bead 13 is oppositely spaced apart from the third side face 133 in the second direction Y. Since the spacing between the second side face 132 and the third side face 133 continuously decreases in the direction of the coating ports 1410 moving away from the feed inlet 111 in the first direction X, the minimum lengths of the flow channels 11220 between the coating ports 1410 close to the feed inlet 111 and the first flow equalizing cavity 11210 are greater than the minimum lengths of the flow channels 11220 between the coating ports 1410 moving away from the feed inlet 111 and the first flow equalizing cavity 11210, so that the pressure lost by the slurry flowing to the coating ports 1410 moving away from the feed inlet 111 during the flow process is lower than the pressure lost by the slurry flowing to the coating ports 1410 close to the feed inlet 111 during the flow process, which is beneficial to balancing the pressure of the slurry at the plurality of coating ports 1410 and to improving the discharge consistency of the plurality of coating ports 1410.

Further provided in some embodiments of the present application is a coating apparatus for an electrode sheet, including the coating die head provided in the above technical solutions, where the coating die head is configured to coat a surface of the electrode sheet with a slurry.

Since the coating apparatus for the electrode sheet includes the coating die head provided in the above technical solutions, the coating apparatus for the electrode sheet can improve the uniformity of slurry coating in the coating process.

Finally, it should be noted that the above embodiments are only for the purpose of illustrating the technical solutions of the present application and are not to be construed as limiting the present application. Although the present application has been described in detail with reference to the above embodiments, it should be understood by a person of ordinary skill in the art that modifications may be made to the technical solutions described in the above embodiments, or equivalent replacement may be made to some or all of the technical features thereof. However, the modifications or replacements do not make the nature of corresponding technical solutions depart from the scope of the technical solutions of the embodiments of the present application, all of which shall fall within the scope of the claims and the description of the present application. In particular, the technical features mentioned in the embodiments may be combined in any manner provided that no structural conflict is present. The present application is not limited to the specific embodiments disclosed herein, but includes all technical solutions falling within the scope of the claims.

**Claims**

1. A coating die head, comprising:

   a die head body provided with a feed inlet, a first flow equalizing cavity, flow channels, and a plurality of coating ports, wherein the first flow equalizing cavity extends in a first direction and is communicated with the feed inlet, the plurality of coating ports are arranged at intervals in the first direction, and the flow channels are configured to communicate the first flow equalizing cavity with the plurality of coating ports; and
   in the direction of the coating ports moving away from the feed inlet, the minimum lengths of the flow channels between the coating ports among the plurality of coating ports and the first flow equalizing cavity show a decreasing trend.

2. The coating die head according to claim 1, wherein the die head body comprises a first die head, a second die head, and a bead; the first die head comprises a first cavity and the feed inlet communicated with the first cavity; the second die head is connected to the bead and covers the first cavity; the bead is spaced apart from at least part of an inner wall of the first cavity; and a gap between the bead and the inner wall of the first cavity forms the flow channels and the first flow equalizing cavity.

3. The coating die head according to claim 2, wherein the bead comprises first side faces, a second side face, and a third side face; the second side face is oppositely spaced apart from the third side face in a second direction; the first side faces are connected between the second side face and the third side face; the third side face is attached to an inner wall face of the first cavity; the flow channels are formed between the first side faces and the inner wall face of the first cavity; the first flow equalizing cavity is formed between the second side face and the inner wall face of the first cavity; and the second direction is perpendicular to the first direction.

4. The coating die head according to claim 2 or 3, wherein the die head body further comprises a gasket; the gasket is provided with a plurality of notches at intervals in the first direction, and the gasket is sandwiched between the first die head and the second die head; and the plurality of notches are all communicated with the flow channels to form the coating ports.

5. The coating die head according to any one of claims 2 to 4, wherein the first die head is provided with a second cavity; the second die head covers the second cavity to form a second flow equalizing cavity; and the second flow equalizing cavity is communicated with the plurality of coating ports.

6. The coating die head according to any one of claims 2 to 5, further comprising first adjusting rods and second adjusting rods, wherein the first adjusting rods are connected to the first die head; the second adjusting rods are connected to the second die head; and the first adjusting rods and the second adjusting rods are configured to adjust the sizes of the openings of the coating ports.

7. The coating die head according to claim 3, wherein the first cavity and the bead both extend in the first direction; and the spacing between the second side face and the third side face continuously decreases in the direction of the coating ports moving away from the feed inlet in the first direction.

8. The coating die head according to claim 3 or 7, wherein the first side face is configured as an arc surface.

9. The coating die head according to claim 4, wherein the die head body further comprises a connecting member; the gasket is provided with a through hole; and the connecting member passes through the bead and the through hole to be connected to the second die head, so as to fix the bead to the second die head.

10. The coating die head according to claim 6, wherein there are a plurality of first adjusting rods arranged at intervals in the first direction, and there are a plurality of second adjusting rods arranged at intervals in the first direction.

11. A coating apparatus for an electrode sheet, comprising the coating die head according to any one of claims 1 to 10, wherein the coating die head is configured to coat a surface of the electrode sheet with a slurry.

FIG. 1

FIG. 2

FIG. 3

FIG. 4

FIG. 5

FIG. 6

FIG. 7

FIG. 8

FIG. 9

FIG. 10

## INTERNATIONAL SEARCH REPORT

| International application No. |
| --- |
| **PCT/CN2023/128540** |

| A. | CLASSIFICATION OF SUBJECT MATTER |
| --- | --- |

B05C 5/02(2006.01)i; B05C 11/10(2006.01)i; H01M 4/139(2010.01)i; H01M 4/08(2006.01)i

According to International Patent Classification (IPC) or to both national classification and IPC

| B. | FIELDS SEARCHED |
| --- | --- |

Minimum documentation searched (classification system followed by classification symbols)

IPC: B05C H01M

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT: 狭缝, 唇, 涂, 均匀, 压力, 两侧, 两端, 中间, 中部, 压条, 垫片, 调节, slot, coat+, uniformity, pressure, control+, adjust+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 219785412 U (NINGDE CONTEMPORARY AMPEREX TECHNOLOGY CO., LTD.) 03 October 2023 (2023-10-03) description, paragraphs [0002]-[0103], and figures 1-9 | 1-11 |
| X | CN 218637773 U (SHENZHEN MANST TECHNOLOGY CO., LTD.) 17 March 2023 (2023-03-17) description, paragraphs [0002]-[0067], and figures 1-7 | 1-11 |
| X | CN 218251223 U (NINGDE CONTEMPORARY AMPEREX TECHNOLOGY CO., LTD.) 10 January 2023 (2023-01-10) description, paragraphs [0002]-[0111], and figures 1-9 | 1-11 |
| X | CN 218282412 U (SUNWODA ELECTRIC VEHICLE BATTERY CO., LTD.) 13 January 2023 (2023-01-13) description, paragraphs [0002]-[0055], and figures 1-5 | 1-11 |
| A | KR 20160088690 A (LG CHEMICAL LTD.) 26 July 2016 (2016-07-26) entire document | 1-11 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 November 2023** | **11 December 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
Information on patent family members

International application No.

**PCT/CN2023/128540**

| Patent document cited in search report | | | Publication date (day/month/year) | Patent family member(s) | | | Publication date (day/month/year) |
|---|---|---|---|---|---|---|---|
| CN | 219785412 | U | 03 October 2023 | None | | | |
| CN | 218637773 | U | 17 March 2023 | None | | | |
| CN | 218251223 | U | 10 January 2023 | None | | | |
| CN | 218282412 | U | 13 January 2023 | None | | | |
| KR | 20160088690 | A | 26 July 2016 | KR | 101737683 | B1 | 29 May 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202321618854